# EUROPÄISCHE PATENTSCHRIFT

(11) **EP 1 812 820 B1**
(45) Veröffentlichungstag und Bekanntmachung des Hinweises auf die Patenterteilung: **25.05.2011**
(21) Anmeldenummer: 05801620.5
(22) Anmeldetag: 08.11.2005
(51) Int. Cl.: G02F 1/13357

(54) **FLÜSSIGKRISTALL - ANZEIGEVORRICHTUNG**
LIQUID CRYSTAL DISPLAY DEVICE
DISPOSITIF D'AFFICHAGE A CRISTAUX LIQUIDES

(30) Priorität: 09.11.2004 DE 202004017411 U; 19.10.2005 DE 202005016373 U
(43) Veröffentlichungstag der Anmeldung: 01.08.2007
(73) Patentinhaber: Element Displays Dr. Wiemer GmbH, 89134 Blaustein (DE)
(72) Erfinder: WIEMER, Wolfram, 89134 Blaustein (DE); BÖHM, Arno, 68305 Mannheim (DE)
(74) Vertreter: Fleck, Hermann-Josef
(86) Internationale Anmeldenummer: PCT/EP2005/011939
(87) Internationale Veröffentlichungsnummer: WO 2006/050910

(56) Entgegenhaltungen:
- EP-B1- 0 853 646
- EP-B1- 0 862 599
- WO-A2-02/084383
- DE-A1- 2 856 976
- DE-A1- 19 536 825
- US-A- 4 599 816
- US-A- 4 952 030
- US-A- 6 124 905
- US-A- 2003 053 015
- US-A1- 2003 053 015
- PATENT ABSTRACTS OF JAPAN Bd. 014, Nr. 449 (P-1111), 26. September 1990 (1990-09-26) -& JP 02 178625 A (MATSUSHITA ELECTRIC IND CO LTD), 11. Juli 1990 (1990-07-11)
- PATENT ABSTRACTS OF JAPAN Bd. 1999, Nr. 09, 30. Juli 1999 (1999-07-30) -& JP 11 109326 A (KAWAGUCHIKO SEIMITSU KK), 23. April 1999 (1999-04-23)

## Beschreibung

Die Erfindung bezieht sich auf eine transflektive Flüssigkristall-Anzeigevorrichtung mit einer mehrschichtigen Anzeigeeinheit, bei der von der Sichtseite zur Rückseite ein Frontpolarisationsfilter, eine Flüssigkristallschicht, ein rückwärtiges Polarisationsfilter und eine Streuschicht gegebenenfalls unter Zwischenfügung weiterer Schichten aufeinanderfolgend angeordnet sind.

Ferner bezieht sich die Erfindung auf eine nicht transparente reflektive Flüssigkristall-Anzeigevorrichtung ohne Hinterleuchtung mit Retroreflexionsschicht.

Eine transflektive Flüssigkristall-Anzeigevorrichtung ist in der WO 02/084 383 A als bekannt ausgewiesen. Bei dieser bekannten Anzeigevorrichtung ist eine Anzeigeeinheit, wie an sich üblich, auf der Außenseite der Substrate mit Polarisationsfiltern abgedeckt, die für eine spannungslos helle Anzeige mit ihren Polarisationsrichtungen zueinander gekreuzt angeordnet sind. Für die Beobachtung besteht eine vorteilhafte Maßnahme darin, dass eine Flüssigkristall-Zellschicht mit einem Verdrehwinkel <90° verwendet wird, die vorteilhaft für eine Betrachtung aus schrägen Blickwinkeln gegenüber der Normalen ist.

Eine weitere Flüssigkristall-Anzeigevorrichtung dieser Art ist in der WO 00/14596 angegeben. Die Flüssigkristall-Anzeigevorrichtung kann transmissiv mit Hinterleuchtung, reflektiv mit frontseitiger Beleuchtung oder transmissiv/reflektiv betrieben werden, wobei eine Anpassung an die äußeren Lichtverhältnisse möglich ist.

Die US 6,124,905 offenbart eine transflektive Flüssigkristall-Anzeigevorrichtung mit einer Anzeigeeinheit, bei der von der Sichtseite zur Rückseite ein Frontpolarisationsfilter, eine Flüssigkristallschicht des TN-Types, deren Verdrehwinkel 90° beträgt, ein rückwärtiges Polarisationsfilter und eine Streuschicht aufeinander folgend angeordnet sind, wobei die Streuschicht mit Fluoreszenzfarbstoffen versehen ist und wobei das rückwärtige Polarisationsfilter als reflektives Polfilter ausgeführt ist. Aus Richtung der Streuschicht auf das rückwärtige Polarisationsfilter gelangendes Licht der gesperrten Polarisationsrichtung wird in Richtung der Streuschicht auf eine dahinter liegende Reflexionsvorrichtung zurückreflektiert und von dort wieder auf das rückwärtige Polarisationsfilter gelangendes Licht einer Polarisationsrichtung wird durchgelassen.

Die US 2003/0053015 A1 offenbart eine Flüssigkristallanzeigevorrichtung mit Retroreflektor und einer Flüssigkristallschicht, die zwischen transparentem und streuendem Zustand geschaltet wird.

In der DE 195 36 825 A1 ist eine Flüssigkristall-Anzeigevorrichtung für transflektiven Betrieb offenbart, die eine isotrop streuende, dichte Streuscheibe mit Streuzentren und Fluoreszenzfarbstoffen aufweist, wobei die Streuzentren Abmessungen im Bereich von einer bis zu einigen zehn Wellenlängen der Strahlung einer dabei vorgesehenen künstlichen Lichtquelle aufweisen.

Bei Flüssigkristall-Anzeigen wird in vielen Situationen nicht die für eine problemlose Erkennbarkeit erforderliche Helligkeit bzw. der erforderliche Kontrast erreicht.

Der Erfindung liegt die Aufgabe zugrunde, eine Flüssigkristall-Anzeigevorrichtung bereit zu stellen, die mit möglichst wenig Energie eine erhöhte Helligkeit bzw. einen erhöhten Kontrast ergibt.

Diese Aufgabe wird mit den Merkmalen des Anspruches 1 oder 2 gelöst. Hierbei ist vorgesehen, dass die Streuschicht oder Retroreflexionsschicht mit Fluoreszenzfarbstoffen versehen ist.

Durch die fluoreszierenden Farbstoffe in der Streuschicht bzw. Streuscheibe oder Retroreflexionsschicht wird auftreffendes Licht in der Emissionswellenlänge des Fluoreszenzfarbstoffes wieder mit gleichmäßiger Verteilung der Polarisationsrichtung emittiert, so dass Licht einer betreffenden Polarisationsrichtung zur Sichtseite hin durch das davor liegende Polarisationsfilter durchgelassen wird.

Ferner trägt zur Helligkeitssteigerung bei, dass das rückwärtige Polarisationsfilter einen die Helligkeit erhöhenden Aufbau besitzt. Solche die Helligkeit erhöhenden Polarisationsfilter sind als sogenannte BEF-Polarisationsfilter (brightness enhancement Filter) bekannt, z.B. reflektive Polarisatoren.

Eine besondere Helligkeit bzw. hoher Kontrast wird dadurch begünstigt, dass die Flüssigkristallschicht mit den Polarisationsfiltern eine Flüssigkristallzelle des Typs spannungslos hell bildet, da bei dieser Ausbildung auf die Zelle von vorne auftreffendes Licht mit der geringsten Absorption durchgelassen wird.

Eine Ausgestaltung der tranflektiven Anzeigevorrichtung, mit der eine erhöhte Helligkeit mit relativ wenig Energieaufwand erreicht wird, besteht darin, dass hinter der Streuschicht eine Hinterleuchtungsanordnung vorhanden ist.

Bei einer weiteren vorteilhaften Ausgestaltung ist vorgesehen, dass die mehrschichtige Anzeigeeinheit in einem Gehäuse aufgenommen ist, das zumindest in seinem rückseitigen Bereich lichtdurchlässig ist.

Das lichtdurchlässige Gehäuse ermöglicht es, dass Umgebungslicht nicht nur von der Frontseite her, sondern auch von der Rückseite her zur Aufhellung der Anzeigeeinheit und Erhöhung des Kontrastes wirksam ist, so dass sich eine verbesserte Erkennbarkeit der Darstellungen auf der Anzeige ergibt. Wird für Nachtbetrieb eine zusätzliche Hinterleuchtung eingesetzt, so kann diese aufgrund der hohen Helligkeit der Anzeigen relativ lichtschwach und damit energiesparend ausgeführt werden.

Umgebungslicht wird möglichst vollständig zur Aufhellung der Anzeige ausgenutzt, wenn vorgesehen ist, dass außer der Rückwand des Gehäuses auch seitliche Breiche lichtdurchlässig sind.

Für eine zusätzliche Aufhellung bei Dunkelheit ist bei der transflektiven Ausführung vorteilhaft vorgesehen, dass in oder auf der Rückwand und/oder in oder auf den seitlichen Bereichen des Gehäuses eine oder mehrere Lichtquellen angeordnet sind.

Zu einer robusten, dauerhaften und energiesparenden transflektiven Ausführung tragen dabei die Merkmale bei, dass die Lichtquellen als Leuchtdioden ausgebildet sind.

Die Ausnutzung der Umgebungshelligkeit und gleichmäßige Ausleuchtung der transflektiven Anzeige wird dadurch unterstützt, dass die Lichtquellen auf einem lichtdurchlässigen Träger angebracht sind.

Die Erfindung wird nachfolgend anhand von Ausführungsbeispielen unter Bezugnahme auf die Zeichnungen näher erläutert. Es zeigen:
- Fig. 1: einen Querschnitt der Schichtenfolge einer Anzeigeeinheit der Flüssig- kristall-Anzeigevorrichtung in schematischer Ansicht und
- Fig. 2: einen Ausschnitt der Schichtenfolge nach Fig. 1 im rückwärtigen Be- reich.

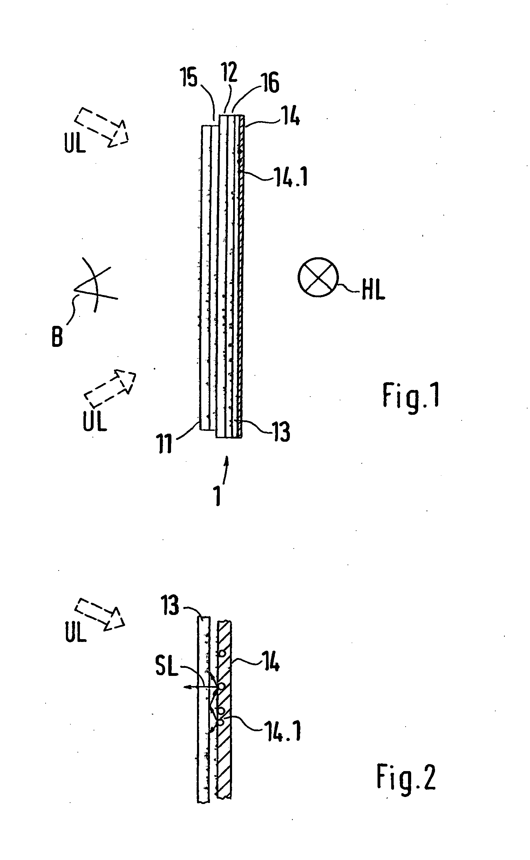

Fig. 1 zeigt eine Flüssigkristall-Anzeigevorrichtung mit einer in einem (nicht gezeigten) Gehäuse aufgenommenen Anzeigeeinheit 1. Die Schichtenfolge der Anzeigeeinheit 1 wird von einer einem Betrachter B zugekehrten Frontseite aus mit Umgebungslicht UL und/ oder von der dem Betrachter B abgewandten Rückseite her mit Hinterleuchtungslicht HL aufgehellt. Von der Frontseite zur Rückseite hin umfasst die Schichtenfolge der Anzeigeeinheit 1 ein Frontpolarisationsfilter 11, eine Flüssigkristallschicht 12 mit einer oder mehreren Flüssigkristallzellen, einem rückwärtigen Polarisationsfilter 13 sowie einer Streuschicht bzw. Streuscheibe 14 oder Retroreflexionsschicht bzw. Retroreflexionsfolie. Außerdem können, wie an sich bekannt, in der Schichtenfolge noch geeignet weitere Schichten 15, 16 angeordnet sein, wie z.B. die eingangs genannten Druckschriften mit noch weiteren Nachweisen zeigen. Die weiteren Schichten 15, 16 können vor und/oder hinter der Flüssigkristallschicht 12 entsprechend ihrer jeweiligen Funktion angeordnet sein. Ein Vorteil der Streuschicht 14 oder Retroreflexionsschicht besteht darin, dass sie mit Fluoreszenzfarbstoffen 14.1 versehen ist.

Als Frontpolarisationsfilter 11 ist eine Standardfolie geeignet, wie sie bisher auch schon bei Flüssigkristallanzeigen verwendet wird. Licht einer Polarisationsrichtung wird mit hohem Prozentsatz durchgelassen, Licht der dazu senkrechten Polarisationsrichtung wird zu einem hohen Prozentsatz gesperrt bzw. absorbiert.

Als Flüssigkristallschicht 12 bzw. Flüssigkristallzelle wird nicht erfindungsgemäß eine solche des TN-Typs eingesetzt, z.B. mit einem Aufbau, der eine spannungslos helle Betriebsart ergibt, weil bei dieser Betriebsart das aus allen Richtungen von vorne auf helle Bereiche (nicht angesteuerte Bereiche) der Flüssigkristallzelle auftreffende Licht mit der geringsten Absorption durchgelassen wird. Eine erfindungsgemäße Ausführung besteht in einer sogenannten LTN-Flüssigkristallzelle, wie sie in der eingangs genannten WO 02/084 383 A angegeben ist.

Als rückwärtiges Polarisationsfilter 13 ist vorteilhaft ein solches mit die Helligkeit erhöhendem Aufbau, ein sogenanntes BEF-Polarisationsfilter (brightness enhancement Filter) eingesetzt. Bei diesem Filtertyp wird das Licht der gesperrten Polarisationsrichtung, das aus Richtung der Streuscheibe 14 auf das rückwärtige Polarisationsfilter 13 gelangt, zum größten Teil wieder in Richtung der Streuscheibe 14 oder Retroreflexionsfolie zurückreflektiert. Von dem von dort dann wieder auf das BEF-Filter 13 gelangenden Licht wird wiederum Licht einer Polarisationsrichtung durchgelassen, die dazu orthogonal polarisierte Strahlung wird wieder Richtung Streuscheibe 14 reflektiert. Wenn das auf die Streuscheibe 14 auftreffende Licht seine Polarisationsrichtung ändert, kann dann ein Teil des reflektierten Lichtes letztlich wieder durch die Flüssigkristallzelle 12 durchtreten, so dass die Helligkeit der Flüssigkristallzelle 12 erhöht wird. Das gilt nicht nur für Licht, das als Hinterleuchtungslicht HL eingestrahlt wird, sondern auch für Licht, das aus Richtung des Betrachters B auf die Anzeigeeinheit 1 trifft, in den hellen Bereichen die Flüssigkristallzelle 12 passieren kann und dann von der Streuscheibe 14 wieder Richtung Flüssigkristallzelle 12 zurückgeworfen bzw. abgestrahlt wird. Als die Helligkeit erhöhendes rückwärtiges Polfilter 13 ist, insbesondere in Verbindung mit der Retroreflexionsfolie bzw. Retroreflexionsschicht, eine spiegelnde nicht diffuse Polfilterfolie verwendet, da die Streuung im Lichtwandler und dem Fluoreszenzfarbstoff der Retroreflexionsfolie bzw. -schicht stattfindet und der Effekt im Wesentlichen zur Wiedergewinnung der reflektierten polarisierten Strahlung gebraucht wird. Auch Prismenstrukturen, insbesondere Mikroprismen, im Bereich der Streuschicht 14 oder Retroreflexionsschicht und/oder eine bestimmten Einsatzfällen angepasste Streuindikatrix können in diesem Bereich vorgesehen sein, um zur Helligkeits- bzw. Kontraststeigerung beizutragen und auch gewünschte Betrachtungswinkel gegenüber der Flächennormalen der Anzeige (Richtung und/oder Öffnungsweite) zu erzielen. Außerdem kann die Streuschicht oder Retroreflexionsschicht bzw. -folie wellenlängenselektiv ausgebildet sein, um Farbeigenschaften zu erreichen.

Das Gehäuse weist eine lichtdurchlässige Rückwand sowie eine die Anzeigeeinheit 1 seitlich umfassende Umrandung auf, die ebenfalls zum Teil oder vollständig lichtdurchlässig ausgeführt sein kann. Als lichtdurchlässiges Material eignet sich Glas oder Kunststoff, wobei das Material klar oder trübe ausgeführt und, falls erwünscht, auch geeignet eingefärbt sein kann. In oder auf der Rückwand oder der Umrandun ist bei einer weiteren transflektiven Ausgestaltung eine Beleuchtungsvorrichtung mit Lichtquellen LQ, insbesondere Leuchtdioden angeordnet. Die Lichtquellen LQ können wegen der hohen Helligkeit der Anzeigen des vorstehend genannten Aufbaus und mit Unterstützung vorhandenen Umgebungslichts relativ lichtschwach, d.h. energiesparend ausgeführt sein.

Zur Erhöhung der Helligkeit trägt auch die besondere Ausbildung der Streuschicht 14 bzw. Streuscheibe oder der Retroreflexionsschicht bzw. Retroreflexionsfolie mit Fluoreszenzfarbstoffen bei. Wie vorstehend erläutert, wird die Helligkeitssteigerung durch das BEF-Polarisationsfilter 13 dadurch erreicht, dass die Polarisationsrichtung des von dem BEF-Polarisationsfilter 13 reflektierten Lichts geändert wird. Die Änderung der Polarisationsrichtung wird besonders wirksam durch den Einsatz der fluoreszierenden Farbstoffe 14.1 in der Streuscheibe 14 oder Retroreflexionsfolie erreicht. Durch die Fluoreszenzfarbstoffe 14.1 wird das kurzwelligere Licht absorbiert und dann in der Emissionswellenlänge der Fluoreszenzfarbstoffe 14.1 wieder mit z.B. gleichmäßiger Verteilung der Polarisationsrichtung emittiert. Zum einfachen Aufbringen auf einer rückwärtigen Trägerschicht ist die Retroreflexionsfolie auf ihrer Rückseite mit einer Selbstklebeschicht versehen.

Die Streuschicht 14 bzw. Streuscheibe oder Retroreflexionsschicht bzw. Retroreflexionsfolie bildet mit hoch echten Fluoreszenzfarbmitteln ein emissives Farbfilter. In einer Ausgestaltung trägt sie als semitransparentes (transflektives) optisches Element (Platte, Film, Sandwich, Druck, Beschichtung) in monochromer Ausführung, z.B. als durchgefärbte Kunststoffplatte, Film, Sandwichstruktur, oder in polychromer Ausführung, z.B. als Druck, Beschichtung auf transluzentem Polymerträger wesentlich zur Erhöhung der Lesbarkeit und des Kontrastes unter ungünstigen äußeren Ausleuchtungsbedingungen bei und ergibt eine Erhöhung der Energieeffizienz durch bessere Ausnutzung einer Hinterleuchtung im transmissiven Betrieb. Hierbei ergeben sich verschiedene prinzipielle Aufbauvarianten, nämlich
- transparentes oder transluzentes thermoplastisches Polymer als Matrix, enthaltend ein oder mehrere photo- und thermostabile Fluoreszenzfarbmittel sowie einen polymeren oder anorganischen partikulären optischen Streuer; daneben können noch handelsübliche UV-Stabilisatoren, Farbmittel oder Prozesshilfsmittel enthalten sein. Als typische Matrixpolymerklassen kommen hier u.a. in Frage die Polycarbonate, die Polyester, die Poly(meth)acrylate und ihre Copolymere, die Polystyrole und Polystyrolcopolymere, Polyvinylchlorid, Polyvinylidendifluorid, Cycloolefincopolymere sowie ihre physikalischen Mischungen und Blends; besonders bevorzugt sind dabei Polycarbonat (PC), Polymethacrylat (PMMA), Polyethylentherephtalat (PET), Methacrylat-Acrylonitril-Butadien-Styrol-Copolymere (MABS) und Polyvinylchlorid (PVC).
- Streukörper und Fluoreszenzfarbmittel können sowohl gemeinsam in einer Schicht oder in separaten Schichten (bei mehrlagigem Gesamtaufbau) vorliegen; im ersten Fall muss der Streukörper photoinaktiv sein, d.h. er darf keine photokatalytische oder photochemische Aktivität aufweisen. Als Beispiele für photoinaktive Streukörper seien Bariumsulfat, Zinksulfid oder Zirkonoxid sowie alle polymeren Streumaterialen, wie z.B. die Paraloid ™ Produktlinie von Arkema genannt (bevorzugt Bariumsulfat und Zinksulfid oder Mischungen davon). Als Beispiel für photoaktive Streukörper seien Titandioxid sowie dotierte und undotierte Zinnoxide genannt (bevorzugt Titandioxid). Als Beispiele für bevorzugte photo- und thermostabile Fluoreszenzfarbmittel seien die Lumogen® F Produktlinie der BASF sowie die Höstasol® Produktlinie der Clariant genannt.
- Die Fluoreszenzfarben werden üblicherweise so dosiert, dass die optische Dichte im Absorptionsmaximum bei 1,5 bis 2 liegt; dies ergibt abhängig von der Dicke der eingefärbten Schicht und der Absorptionseffizienz des Farbmittels eine effektive Dosierungshöhe von 0,001 bis 10 Gew.-%; typischerweise liegt diese bei dicken massegefärbten Systemen (z.B. Platten, Sandwiches) >2 mm Dicke bei 0,001 bis 0,1 Gew.-%, während sie bei dünnen massegefärbten Systemen (Filmen, Sandwiches) <0,5 mm Dicke bei 0,05 bis 2 Gew.-% und bei Druck- oder Beschichtungs-(Coating)Anwendungen bei 0,5 bis 10 Gew.-% liegt.
- Die partikulären Streumaterialien werden üblicherweise so dosiert, dass die mittleren Transmissionswerte des Gesamtsystems außerhalb der Absorptionsbande des Farbmittels bei ca. 50 % liegen. Dies ergibt abhängig von der Dicke der additivierten Schicht und der Streueffizienz des Streukörpers eine effektive Dosierungshöhe von 0,1 bis 40 Gew.-%; typischerweise liegt diese bei dicken masseadditivierten Systemen (z.B. Platten, Sandwiches) >2 mm Dicke bei 0,1 bis 5 Gew.-% und bei dünnen masseadditivierten Systemen (Filmen, Sandwiches) <0,5 mm Dicke bei 2 bis 40 Gew.-%. Bei Druck- oder Coatinganwendungen reichen die erzielbaren Schichtdichten (von wenigen Micrometern) im allgemeinen nicht aus, den gewünschten Streueindruck zu erzeugen. Hier sollen die Streumaterialien vollständig oder zumindest zum überwiegenden Teil in das zu bedruckende bzw. zu beschichtende Substrat eingebracht werden.

Bei der nichttransparenten reflektiven optischen Ausführung, die zum Aufbau gut lesbarer Anzeigen ohne Hinterleuchtung (reflektiver Betrieb) vorteilhaft eingesetzt werden, kommen ebenfalls verschiedene Ausführungsvarianten als mehrlagiger Film, Sandwichstruktur, Druck oder Beschichtung (Coating) in Frage, wobei als monochrome Ausführung z.B. ein in der Deckschicht eingefärbter Film, eine Sandwichstruktur aus mindestens einer massegefärbten transparenten Schicht und einer dahinter liegenden, gegebenenfalls gerichtet reflektierenden Schicht oder als polychrome Ausführung ein Druck, eine Beschichtung (Coating) auf reflektivem Polymer- oder Metallträger in Frage kommen. Eine bevorzugte Ausführungsform besteht in einer mikroprismatischen Sandwichfolie, wie z.B. in EP 0 853 646 oder EP 0 862 599 beschrieben.

In einer besonders bevorzugten Ausführungsform dient das emissive Farbfilter gleichzeitig als Baugruppen-/LC-Glasträger.

Beispielsweise besteht eine erste Ausführungsform darin, dass ein grüngelber emissiver Farbfilter in Plattenform verwendet wird, wobei der Aufbau beispielsweise in einer gegossenen PMMA-Platte besteht, die einschichtig (z.B. etwa 2 bis 6 mm, z.B. 3 oder 5 mm dick) ausgeführt ist und mit 0,01 % Lumogen F gelb 083 (BASF) und 2 % Bariumsulfat (Blanc Fixe N; Sachtleben) ausgeführt ist. Weitere Ausführungsbeispiele bestehen darin, dass der Aufbau analog dem Ausführungsbeispiel 1 gewählt ist, jedoch unter Verwendung von Lumogen F gelb 170 (BASF; Gelb), Lumogen F orange 240 (BASF; orange), Lumogen F rosa 285 (BASF; orangerot), Hostasol rot GG (Clariant; s.o. 63; orangerot), Lumogen F rot 305 (BASF; rot) und/oder Lumogen F grün 850 (BASF; grün).

Bei einer weiteren nicht erfindungsgemäßen, Ausführungsform als Folie kann ein emissives Verhalten durch Einsatz eines optischen Aufhellers anstelle eines Fluoreszenzfarbmittels erzielt werden.

Für eine besonders wirksame Erhöhung der Helligkeit und auch des Kontrasts trägt vorteilhaft die Kombination der drei Komponenten LTN-Flüssigkristallzelle 12 in der Betriebsart spannungslos hell, BEF-Polarisationsfilter als rückwärtiges Polarisationsfilter 13 und Streuschicht 14 bzw. Streuscheibe oder Retroreflexionsschicht bzw. Retroreflexionsfolie mit den Fluoreszenzfarbstoffen 14.1 bei. Auf diese Weise wird die Helligkeit von Flüssigkristallanzeigen erheblich verbessert, und es werden bereits bei relativ geringer Umgebungshelligkeit deutlich lesbare Anzeigen auch ohne zusätzliche Hinterleuchtung erhalten.

## Patentansprüche

1. Transflektive Flüssigkristall-Anzeigevorrichtung mit einer mehrschichtigen Anzeigeeinheit (1), bei der von der Sichtseite zur Rückseite ein Frontpolarisationsfilter (11), eine Flüssigkristallschicht (12) des LTN-Typs, deren Verdrehwinkel weniger als 90° beträgt, ein rückwärtiges Polarisationsfilter (13) und eine Streuschicht (14) gegebenenfalls unter Zwischenfügung weiterer Schichten (15, 16) aufeinander folgend angeordnet sind,
wobei die Streuschicht (14) zum einen mit optischen Streukörpern und zum anderen mit Fluoreszenzfarbstoffen (14.1) gemeinsam in einer Schicht versehen ist oder die Streukörper und Fluoreszenzfarbstoffe in separaten Schichten angeordnet sind, wobei ferner das rückwärtige Polarisationsfilter (13) einen reflektiven Polarisator zum Bilden eines die Helligkeit erhöhenden Aufbaus aufweist, bei dem aus Richtung der Streuschicht auf das rückwärtige Polarisationsfilter (13) gelangendes Licht der gesperrten Polarisationsrichtung wiederum in Richtung der Streuschicht zurückreflektiert wird und von dort wieder auf das rückwärtige Polarisationsfilter (13) gelangendes Licht einer Polarisationsrichtung durchgelassen wird, während das dazu orthogonal polarisierte Licht wieder in Richtung Streuschicht (14) reflektiert wird.

2. Nicht transparente reflektive Flüssigkristall-Anzeigevorrichtung ohne Hinterleuchtung mit einer mehrschichtigen Anzeigeeinheit (1), bei der von der Sichtseite zur Rückseite ein Frontpolarisationsfilter (11), eine Flüssigkristallschicht (12) des LTN-Typs, deren Verdrehwinkel weniger als 90° beträgt, ein rückwärtiges Polarisationsfilter (13) und eine Retro-Reflexionsschicht gegebenenfalls unter Zwischenfügung weiterer Schichten (15, 16) aufeinander folgend angeordnet sind,
wobei die Retro-Reflexionsschicht zum einen mit optischen Streukörpern und zum anderen mit Fluoreszenzfarbstoffen (14.1) gemeinsam in einer Schicht versehen ist oder die Streukörper und Fluoreszenzfarbstoffe in separaten Schichten angeordnet sind, wobei ferner das rückwärtige Polarisationsfilter (13) einen reflektiven Polarisator zum Bilden eines die Helligkeit erhöhenden Aufbaus aufweist, bei dem aus Richtung der Retro-Reflexionsschicht auf das rückwärtige Polarisationsfilter (13) gelangendes Licht der gesperrten Polarisationsrichtung wiederum in Richtung der Retro-Reflexionsschicht zurückreflektiert wird und von dort wieder auf das rückwärtige Polarisationsfilter (13) gelangendes Licht einer Polarisationsrichtung durchgelassen wird, während das dazu orthogonal pola-risierte Licht wieder in Richtung Retro-Reflexionsschicht reflektiert wird.

3. Flüssigkristall-Anzeigevorrichtung nach Anspruch 1,
**dadurch gekennzeichnet,**
**dass** die Streukörper photoinaktiv sind.

4. Anzeigevorrichtung nach einem der vorhergehenden Ansprüche,
**dadurch gekennzeichnet,**
**dass** die Flüssigkristallschicht (12) mit den Polarisationsfiltern (11, 13) eine Flüssigkristallzelle des Typs spannungslos hell bildet.

5. Anzeigevorrichtung nach Anspruch 3 oder 4, soweit sich auf 1 oder 3 bereicht, Anspruch 4
**dadurch gekennzeichnet,**
**dass** hinter der Streuschicht eine Hinterleuchtungsanordnung (HL) vorhanden ist.

6. Flüssigkristall-Anzeigevorrichtung nach einem der vorhergehenden Ansprüche, **dadurch gekennzeichnet,**
**dass** die mehrschichtige Anzeigeeinheit in einem Gehäuse aufgenommen ist, das zumindest in seinem rückseitigen Bereich lichtdurchlässig ist.

7. Anzeigevorrichtung nach Anspruch 6,
**dadurch gekennzeichnet,**
**dass** außer der Rückwand des Gehäuses auch seitliche Bereiche lichtdurchlässig sind.

8. Anzeigevorrichtung nach Anspruch 6 oder 7, sofern sich diese mittelbar oder unmittelbar auf Anspruch 1 beziehen,
**dadurch gekennzeichnet,**
**dass** in oder auf der Rückwand und/oder in oder auf den seitlichen Bereichen des Gehäuses eine oder mehrere Lichtquellen angeordnet sind.

9. Anzeigevorrichtung nach Anspruch 8,
**dadurch gekennzeichnet,**
**dass** die Lichtquellen als Leuchtdioden ausgebildet sind.

10. Anzeigevorrichtung nach Anspruch 8 oder 9,
**dadurch gekennzeichnet,**
**dass** die Lichtquellen auf einem lichtdurchlässigen Träger angebracht sind.

## Claims

1. Transflective liquid crystal display device comprising a multilayered display unit (1), in which, from the viewing side to the rear side, a front polarization filter (11), a liquid crystal layer (12) of the LTN type, the twist angle of which is less than 90°, a rear polarization filter (13) and a scattering layer (14), if appropriate with interposition of further layers (15, 16), are arranged successively, wherein the scattering layer (14) is provided firstly with optical scattering bodies and secondly with fluorescent dyes (14.1) jointly in one layer or the scattering bodies and fluorescent dyes are arranged in separate layers, wherein the rear polarization filter (13) furthermore has a reflective polarizer for forming a brightness-increasing construction, in which light of the blocked polarization direction that reaches the rear polarization filter (13) from the direction of the scattering layer is reflected back again in the direction of the scattering layer and light of a polarization direction that reaches the rear polarization filter (13) again from there is transmitted, while the light polarized orthogonally with respect thereto is reflected again in the direction of the scattering layer (14).

2. Non-transparent reflective liquid crystal display device without backlighting and comprising a multilayered display unit (1), in which, from the viewing side to the rear side, a front polarization filter (11), a liquid crystal layer (12) of the LTN type, the twist angle of which is less than 90°, a rear polarization filter (13) and a retroreflection layer, if appropriate with interposition of further layers (15, 16), are arranged successively,
wherein the retroreflection layer is provided firstly with optical scattering bodies and secondly with fluorescent dyes (14.1) jointly in one layer or the scattering bodies and fluorescent dyes are arranged in separate layers, wherein the rear polarization filter (13) furthermore has a reflective polarizer for forming a brightness-increasing construction, in which light of the blocked polarization direction that reaches the rear polarization filter (13) from the direction of the retroreflection layer is reflected back again in the direction of the retroreflection layer and light of a polarization direction that reaches the rear polarization filter (13) again from there is transmitted, while the light polarized orthogonally with respect thereto is reflected again in the direction of the retroreflection layer.

3. Liquid crystal display device according to Claim 1,
**characterized**
**in that** the scattering bodies are photo-inactive.

4. Display device according to any of the preceding claims,
**characterized**
**in that** the liquid crystal layer (12) together with the polarization filters (11, 13) forms a liquid crystal cell of the type voltage-free bright.

5. Display device according to Claim 1, 3 or 4, in so far as Claim 4 refers to Claim 1 or 3,
**characterized**
**in that** a backlighting arrangement (HL) is present behind the scattering layer.

6. Liquid crystal display device according to any of the preceding claims,
**characterized**
**in that** the multilayered display unit is accommodated in a housing, which is light-transmissive at least in its rear region.

7. Display device according to Claim 6,
**characterized**
**in that**, in addition to the rear wall of the housing, lateral regions are also light-transmissive.

8. Display device according to Claim 6 or 7, in so far as the latter refer indirectly or directly to Claim 1,
**characterized**
**in that** one or more light sources are arranged in or on the rear wall and/or in or on the lateral regions of the housing.

9. Display device according to Claim 8,
**characterized**
**in that** the light sources are embodied as light-emitting diodes.

10. Display device according to Claim 8 or 9,
**characterized**
**in that** the light sources are fitted on a light-transmissive carrier.

## Revendications

1. Dispositif d'affichage à cristaux liquides transflectifs comprenant une unité d'affichage multicouche (1), dans lequel sont disposés consécutivement, du côté de visualisation vers le côté arrière, un filtre de polarisation avant (11), une couche de cristaux liquides (12) du type LTN dont l'angle de rotation est inférieur à 90°, un filtre de polarisation arrière (13) et une couche diffusante (14) avec interposition éventuelle de couches supplémentaires (15, 16),
la couche diffusante (14) étant prévue de façon combinée d'une part avec des corps optiquement diffusants et d'autre part avec des colorants fluorescents (14.1) en une seule couche ou bien les corps diffusants et les colorants fluorescents étant disposés dans des couches séparées, le filtre de polarisation arrière (13) présentant en outre un polariseur réfléchissant destiné à former une structure augmentant la luminosité, au moyen duquel une lumière provenant de la couche diffusante incidente sur le filtre de polarisation arrière (13) et dont la direction de polarisation est bloquée est de nouveau rétroréfléchie dans la direction de la couche diffusante et une lumière ayant une direction de polarisation provenant de cet endroit et à nouveau incidente sur le filtre de polarisation arrière (13) est admise à passer, alors qu'une lumière polarisée perpendiculairement à celle-ci est rétroréfléchie dans la direction de la couche diffusante (14).

2. Dispositif d'affichage à cristaux liquides réfléchissant non transparent sans rétroéclairage comprenant une unité d'affichage multicouche (1), dans lequel sont disposés consécutivement du côté de visualisation vers le côté arrière, un filtre de polarisation avant (11), une couche de cristaux liquides (12) du type LTN dont l'angle de rotation est inférieur à 90°, un filtre de polarisation arrière (13) et une couche rétroréfléchissante avec interposition éventuelle de couches supplémentaires (15, 16),
la couche rétroréfléchissante étant prévue de façon combinée d'une part avec des corps optiquement diffusants et d'autre part avec des colorants fluorescents (14.1) en une seule couche ou bien les corps diffusants et les colorants fluorescents étant disposés dans des couches séparées, le filtre de polarisation arrière (13) présentant en outre un polariseur réfléchissant destiné à former une structure augmentant la luminosité, au moyen duquel une lumière incidente sur le filtre de polarisation arrière (13) et dont la direction de polarisation est bloquée est de nouveau rétroréfléchie dans la direction de la couche rétroréfléchissante et une lumière ayant une direction de polarisation provenant de cet endroit et à nouveau incidente sur le filtre de polarisation arrière (13) est admise à passer, alors qu'une lumière polarisée perpendiculairement à celle-ci est rétroréfléchie dans la direction de la couche rétroréfléchissante.

3. Dispositif d'affichage à cristaux liquides selon la revendication 1, **caractérisé en ce que** les corps diffusants sont photo-inactifs.

4. Dispositif d'affichage à cristaux liquides selon l'une des revendications précédentes, **caractérisé en ce que** la couche de cristaux liquides (12) forme avec les filtres de polarisation (11, 13) une cellule de cristaux liquides du type lumineux sans tension.

5. Dispositif d'affichage selon la revendication 1, 3 ou 4, dans la mesure où la revendication 4 dépend des revendications 1 ou 3, **caractérisé en ce qu'**un dispositif de rétroéclairage (HL) est présent derrière la couche diffusante.

6. Dispositif d'affichage selon l'une des revendications précédentes, **caractérisé en ce que** l'unité d'affichage multicouche est logée dans un boîtier qui est transparent à la lumière au moins dans la région de sa face arrière.

7. Dispositif d'affichage selon la revendication 6, **caractérisé en ce que** des régions latérales sont également transparentes à la lumière en plus de la paroi arrière du boîtier.

8. Dispositif d'affichage selon la revendication 6 ou 7, dans la mesure où celles-ci dépendent indirectement ou directement de la revendication 1, **caractérisé en ce que** une ou plusieurs sources de lumière sont disposées dans ou sur la paroi arrière et/ou dans ou sur les zones latérales du boîtier.

9. Dispositif d'affichage selon la revendication 8, **caractérisé en ce que** les sources de lumière sont constituées de diodes électroluminescentes.

10. Dispositif d'affichage selon la revendication 8 ou 9, **caractérisé en ce que** les sources de lumière sont placées sur un support transparent à la lumière.
